(19) Europäisches Patentamt
European Patent Office
Office européen des brevets

(11) **EP 3 517 940 B1**

(12) **FASCICULE DE BREVET EUROPEEN**

(45) Date de publication et mention
de la délivrance du brevet:
**19.08.2020   Bulletin 2020/34**

(51) Int Cl.:
**G01N 23/201** (2018.01)   **G01B 15/04** (2006.01)

(21) Numéro de dépôt: **19153319.9**

(22) Date de dépôt: **23.01.2019**

(54) **PROCEDE ET SYSTÈME DE DETERMINATION DE LA VARIATION D'INTENSITE DIFFRACTEE PAR UN RESEAU BIDIMENSIONNEL ORGANISE LE LONG D'UNE DIRECTION DONNEE**

VERFAHREN UND SYSTEM ZUR BESTIMMUNG DER VARIATION DER STREUINTENSITÄT EINES ZWEIDIMENSIONALEN GITTERS ENTLANG EINER BESTIMMTEN RICHTUNG

METHOD AND SYSTEM FOR DETERMINING THE VARIATION IN DIFFRACTION INTENSITY OF A TWO-DIMENSIONAL GRATING  ALONG A GIVEN DIRECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.01.2018   FR 1850607**

(43) Date de publication de la demande:
**31.07.2019   Bulletin 2019/31**

(73) Titulaire: **Commissariat à l'énergie atomique et aux énergies alternatives 75015 Paris (FR)**

(72) Inventeurs:
• **GERGAUD, Patrice**
  **38500 LA BUISSE (FR)**
• **FREYCHET, Guillaume**
  **38000 GRENOBLE (FR)**

(74) Mandataire: **Brevalex**
  **95, rue d'Amsterdam**
  **75378 Paris Cedex 8 (FR)**

(56) Documents cités:
**WO-A2-01/09925**

• **HU TENGJIAO ET AL: "Small angle x-ray scattering metrology for sidewall angle and cross section of nanometer scale line gratings", JOURNAL OF APPLIED PHYSICS, AMERICAN INSTITUTE OF PHYSICS, US, vol. 96, no. 4, 1 janvier 2004 (2004-01-01), pages 1983-1987, XP012068627, ISSN: 0021-8979, DOI: 10.1063/1.1773376**
• **MIKA PFLÜGER ET AL: "Selective measurement of small metrology targets using CD-GISAXS", PHOTOMASK TECHNOLOGY, 16 octobre 2017 (2017-10-16), page 33, XP055516479, DOI: 10.1117/12.2280455 ISBN: 978-1-5106-1377-5**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE ET ÉTAT DE LA TECHNIQUE ANTÉRIEURE

La présente invention se rapporte à un procède de détermination de la variation d'intensité diffractée par un réseau bidimensionnel organisé le long d'une direction donnée, en particulier pour réaliser une reconstruction tridimensionnelle de la morphologie d'objets comportant au moins un tel réseau.

En microélectronique par exemple, on souhaite pouvoir déterminer la morphologie d'objets à l'échelle nanométrique, par exemple la morphologie dans le plan et hors-plan de couches minces nanostructurées, telles que des réseaux de lignes, copolymères à blocs,...

Il existe une technique de diffusion des rayons X qui peut être utilisée pour reconstruire ces morphologies. Celle-ci est désignée par CD-SAXS (Critical-Dimension Small-Angle X-ray Scattering en terminologie anglo-saxonne). Cette technique consiste à collecter une série d'images obtenues par diffusion des rayons X aux petits angles en mode transmission, à différents angles de rotation de l'échantillon.

Cette technique est par exemple décrite dans le document Tengjiao Hu, Ronald L. Jones, Wen-li Wu, Eric K. Lin, Qinghuang Lin, Denis Keane, Steve Weigand and John Quintana Small angle x-ray scattering metrology for sidewall angle and cross section of nanometer scale line gratings Journal of Applied Physics 2004, 96, 1983 doi: 10.1063/1.1773376.

En considérant les directions qx, qy, qz dans le réseau réciproque, l'échantillon comporte par exemple sur une face un réseau de lignes ou nervures. L'échantillon est disposé sur un porte-échantillon mobile en rotation autour de la direction qy. Les lignes sont sensiblement parallèles à qy. L'échantillon est pivoté autour de qy d'un angle φ. A φ = 0, le faisceau incident est aligné avec la direction qz

Des images dans le plan (qx,qy) à plusieurs angles autour de la direction qz sont réalisées. Il s'agit de figures de diffraction. Les images obtenues pour φ ≠ 0, correspondent à des coupes de l'échantillon dans un plan sécant au plan (qx, qy). On combine ensuite les images, ce qui permet de reconstruire l'espace réciproque en trois dimensions.

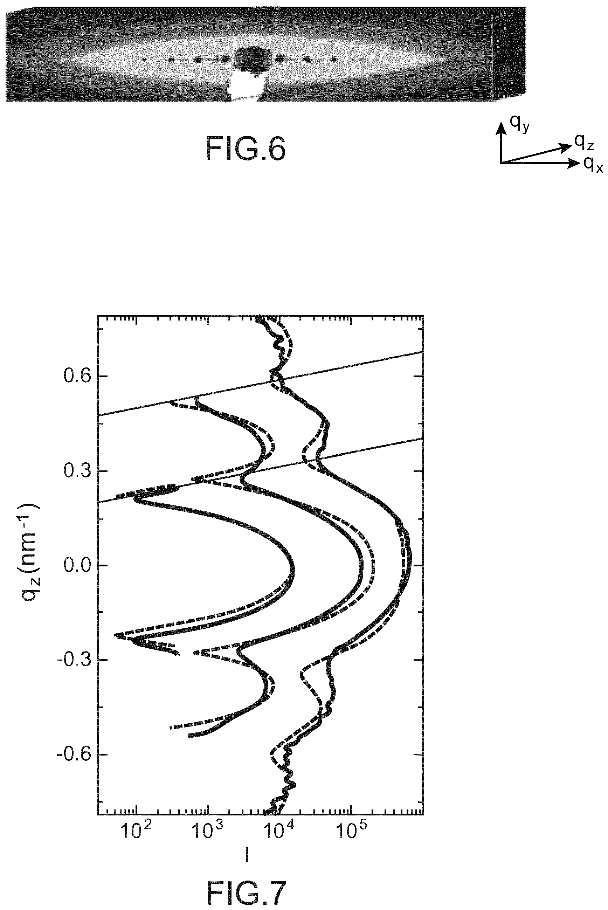

On extrait alors les profils d'intensité selon la direction qz à plusieurs positions le long de la direction qx, ces positions étant données par la périodicité du réseau de lignes, tels que ceux représentés sur la figure 6. Une analyse de ces profils permet de remonter à la morphologie tridimensionnelle de l'objet, par exemple il est possible de déterminer la période de répétition, la hauteur et l'angle de la paroi latérale du réseau ou, plus généralement, le profil de la section transversale du réseau.

La technique CD-SAXS est très bien adaptée à la quantification de la structure moyenne de nanoobjets bien définis tels que les réseaux de lignes issus de la lithographie. Cependant cette technique requiert de réaliser un certain nombre de clichés de diffraction. Par exemple, si φ varie entre -45° et 45° avec un cliché de diffraction tous les 1°, cela représente 91 clichés de diffraction. En considérant un temps d'acquisition de 30 min à chaque position angulaire, il faut plus de 45 heures pour uniquement acquérir les clichés, sans compter le temps de traitement de clichés.

### EXPOSÉ DE L'INVENTION

C'est par conséquent un but de la présente invention d'offrir une méthode de détermination, par diffraction en transmission, de la variation d'intensité diffractée par un réseau bidimensionnel organisé, le long d'une direction donnée, plus simple et plus rapide que les méthodes de l'état de la technique.

Le but énoncé ci-dessus est atteint par une méthode de détermination, par diffraction en transmission d'un faisceau incident, de la variation d'intensité diffractée par un réseau bidimensionnel organisé, le long d'une direction donnée qui est orthogonale au plan du réseau bidimensionnel organisé, comportant :

- l'inclinaison du réseau par rapport à une direction du faisceau incident,
- la mise en rotation du réseau autour de la direction donnée de manière continue,
- l'acquisition d'au moins un cliché de diffraction sur au moins un quart de révolution,
- extraction de la variation d'intensité diffractée par un réseau bidimensionnel organisé.

Grâce à l'invention, on peut extraire directement du cliché de diffraction la variation d'intensité diffractée en fonction de l'angle de rotation, qui peut être reliée très aisément à la position le long de la direction qz pour chaque position qx donnée.

Le plan du réseau est le plan dans lequel s'étendent selon les deux directions les motifs du réseau, par exemple des rainures, des nervures, des trous...

Le cliché de diffraction obtenu représente plusieurs ellipses concentriques, qui permettent d'obtenir directement la variation de l'intensité en fonction de l'angle de rotation, et d'en déduire la variation de l'intensité le long de la direction donnée. Ensuite, on peut établir la morphologie tridimensionnelle de l'objet.

La méthode selon l'invention utilise un seul cliché de diffraction au lieu de plusieurs clichés de diffraction à différents angles d'inclinaison du réseau par rapport à la direction donnée. La méthode selon l'invention est donc beaucoup plus simple et plus rapide.

En d'autres termes, lors de l'acquisition du cliché de diffraction, le réseau bidimensionnel organisé est déplacé de sorte que le cliché de diffraction acquiert une succession de rayons diffusés correspondant à des interférences constructives dans des positions différentes successives le long de la direction donnée. Au contraire, les méthodes de l'état de la technique acquièrent une succession de clichés de diffraction, chacun à une position différente le long de la direction donnée.

La variation d'intensité déterminée est ensuite traitée pour reconstruction la morphologie des objets portant le réseau bidimensionnel organisé, comme avec la technique CD-SAXS

Un système de reconstruction tridimensionnelle d'objets comportant un réseau bidimensionnel organisé, selon l'invention peut comporter une source de rayons X formant un faisceau incident, un détecteur bidimensionnel pour former des clichés de diffraction par transmission, un porte-échantillon. Le porte-échantillon est tel que la normale au plan du réseau forme un angle non nul avec la direction du faisceau incident, et l'échantillon pendant toute l'acquisition du cliché de diffraction peut être mis en rotation autour de la normale au plan du réseau.

Par exemple, le porte-échantillon comporte un passage traversant permettant au faisceau incident de frapper directement la face arrière de l'échantillon.

Le porte-échantillon comporte par exemple une platine destinée à supporter l'échantillon, des moyens pour incliner la platine par rapport à la direction du faisceau incident, et des moyens de mise en rotation de ladite platine autour de la normale au plan du réseau. Par exemple, les moyens de mise en rotation comportent par exemple une vis sans fin.

La présente invention a alors pour objet une méthode de détermination, par diffraction en transmission d'un faisceau incident, de la variation d'intensité diffractée par un réseau bidimensionnel organisé dans une direction donnée orthogonale au plan du réseau bidimensionnel, comportant :

- mise en place du réseau bidimensionnel organisé de sorte que la direction donnée forme un angle avec la direction du faisceau incident,
- mise en rotation du réseau bidimensionnel organisé autour de la direction donnée,
- acquisition d'un cliché de diffraction pendant au moins un quart de révolution du réseau bidimensionnel organisé autour de la direction donnée,
- arrêt de la rotation,
- extraction de la variation d'intensité diffractée dans la direction donnée.

De manière avantageuse, le cliché de diffraction comporte plusieurs quarts d'ellipses concentriques, chaque ellipse correspondant chacune à un ordre de diffraction.

De manière préférée, l'acquisition se fait pendant au moins une révolution complète, le cliché de diffraction comporte alors des ellipses concentriques et une moyenne sur les quatre quarts de chaque ellipse est avantageusement effectuée.

La diffraction est par exemple une diffraction de rayons X.

L'angle d'inclinaison peut être compris entre 45° et 60°.

La présente invention a également pour objet une méthode de reconstruction tridimensionnelle d'une morphologie d'au moins un objet comportant un réseau bidimensionnel organisé comportant :

- la détermination de la variation d'intensité diffractée en transmission par un réseau bidimensionnel organisé, dans une direction donnée, en appliquant la méthode de détermination selon l'invention,
- le traitement de la variation d'intensité diffractée dans la direction donnée de sorte à obtenir des caractéristiques d'une section transversale du réseau bidimensionnel organisé.

La méthode de reconstruction peut avantageusement être mise en œuvre pendant la fabrication de composants par des procédés microélectroniques.

La présente invention a également pour objet un système de reconstruction tridimensionnelle de la morphologie d'objets présentant un réseau bidimensionnel organisé comportant :

- un dispositif d'acquisition d'au moins un cliché de diffraction, comprenant un source d'un faisceau incident, un détecteur, un porte-échantillon disposé entre la source de faisceau incident et le détecteur, le porte-échantillon comportant une platine et un support et des moyens de mise en rotation continue de la platine autour d'une direction donnée normale à l'objet, la platine et le support étant configurés pour orienter le réseau bidimensionnel organisé de sorte que la direction orthogonale au plan du réseau forme un angle avec la direction du faisceau incident,
- des moyens de traitement du au moins un cliché de diffraction.

La platine peut comporter une fenêtre alignée avec la direction donnée.

Dans un exemple de réalisation, les moyens de mise en rotation continue comportent une vis sans fin coopérant avec un bord de la platine et un moteur électrique entrainant la vis sans fin.

## BRÈVE DESCRIPTION DES DESSINS

La présente invention sera mieux comprise sur la base de la description qui va suivre et des dessins en annexe sur lesquels:

- la figure 1 est une représentation schématique d'une vue de face d'un exemple d'échantillon dont la morphologie peut être déterminée grâce au système de reconstruction selon l'invention,
- la figure 2 est une représentation schématique d'un exemple d'un système de reconstruction selon l'invention,

- la figure 3 est une représentation schématique d'une figure de diffraction mesurée grâce au système selon l'invention,
- la figure 4 est un schéma explicatif du fonctionnement de l'invention représentant un réseau réciproque dans le plan (qx, qz) et de la sphère d'Ewald,
- la figure 5 est une représentation schématique des tiges de diffraction dans le plan (qx, qz) qui correspond à une coupe à la position qy=0 donnée du réseau réciproque tridimensionnel,
- la figure 6 est une figure de diffraction obtenue sans rotation de l'échantillon,
- La figure 7 est une représentation graphique des variations de l'intensité en fonction de qz en $nm^{-1}$ à plusieurs positions le long de la direction qx obtenues par CD-SAXS,
- la figure 8 est une image d'un échantillon obtenue grâce au procédé selon l'invention,
- la figure 9 représente la cartographie selon qx et qz réalisée sur le même échantillon que celui utilisé pour l'image de la figure 9, obtenue par la méthode de l'état de la technique.

## EXPOSÉ DÉTAILLÉ DE MODES DE RÉALISATION PARTICULIERS

Le système de reconstruction tridimensionnelle permet de reconstruire la morphologie d'objets de dimensions nanométriques répartis selon un réseau bidimensionnel organisé. Dans la présente demande, on entend par « réseau bidimensionnel organisé », un ensemble d'objets tridimensionnels répartis régulièrement selon un réseau 2D, appelé plan du réseau...

Par exemple, le réseau bidimensionnel organisé peut être un réseau de rainures parallèles, un réseau de plots ou de trous répartis selon un réseau bidimensionnel. Le réseau peut avoir toute forme, carrée, rectangulaire...le plan dans lequel s'étend l'ensemble des objets est le plan du réseau. Dans le cas présenté, il s'agit du plan XY ou (qx, qy) dans l'espace réciproque.

Dans la description qui va suivre les directions X, Y, Z sont celles de l'espace réel, et les directions qx, qy, qz sont celle de l'espace réciproque. qx est orthogonal à Y et Z, qy est orthogonal à X et Z et qz est orthogonal à X et Y. Dans la suite pour simplification on peut supposer que le réseau direct 2D est rectangulaire, les axes (X, qx) sont alors parallèles, les axes (Y, qy) sont parallèles et les axes (Z, qz) sont parallèles.

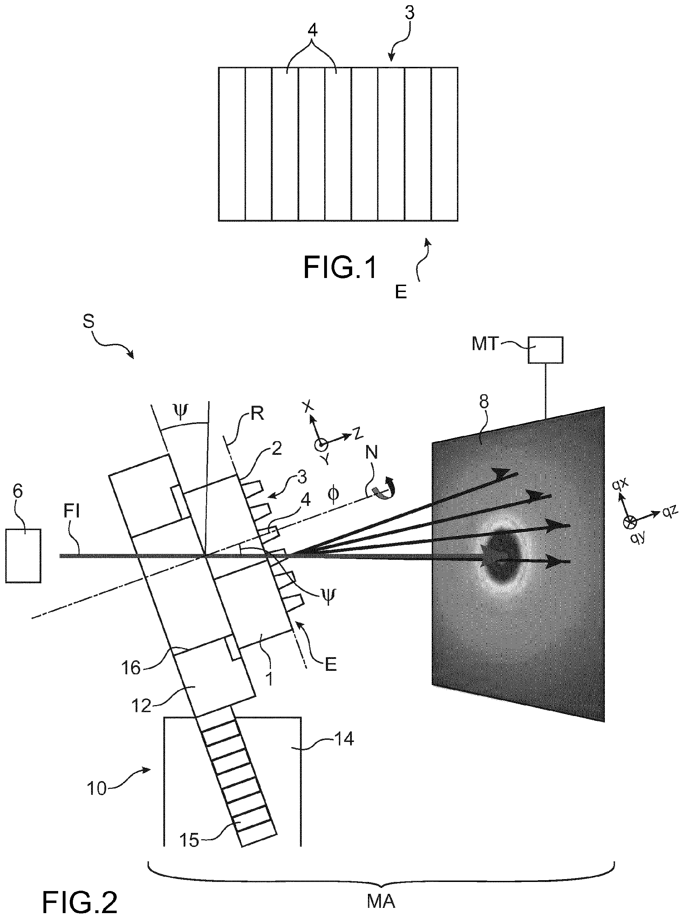

Sur les figures 1 et 2, on peut voir un exemple d'un échantillon comportant un substrat 1 et un réseau bidimensionnel organisé 3 formé sur une face du substrat, dont la morphologie peut être déterminée par l'invention. L'échantillon E comporte sur une face 2 un réseau de nervures parallèles 4. La détermination de la morphologie consiste par exemple à déterminer le pas du réseau, la hauteur des nervures, la pente des flancs des nervures...

Sur la figure 2, on peut voir un schéma d'un système de reconstruction tridimensionnelle S. Le système S comporte des moyens d'acquisition MA de clichés de diffraction et des moyens de traitement MT des clichés de diffraction. Les moyens de traitement sont mis en œuvre par un ordinateur.

Les moyens d'acquisition MA comportent une source de rayons X 6 mettant un faisceau incident selon une direction donnée Z. Le système comporte un détecteur 8 des rayons X diffusés, le détecteur est de préférence un détecteur bidimensionnel, disposé orthogonalement à la direction Z. En variante, une source de flux de neutrons peut être utilisée.

Le système comporte un porte-échantillon 10 interposé entre la source de rayons X 6 et le détecteur 8.

Le porte-échantillon 10 est apte à permettre la mesure de rayons diffusées en mode transmission.

Le porte-échantillon comporte une platine 12 destinée à supporter l'échantillon et un support 14 de platine.

La platine 12 et le support 14 sont tels que la platine peut être inclinée, de sorte que sa normale N au plan de la platine forme un angle ψ avec la direction du faisceau incident. Il en résulte que la direction orthogonale au plan R du réseau de l'échantillon monté sur la platine forme un angle ψ avec la direction donnée.

Le plan R du réseau est le plan dans lequel s'étend le réseau; les nervures s'étendant dans ce plan.

En outre, la platine 12 et le support 14 sont tels que la platine 12 tourne au autour de la normale à l'échantillon. Par exemple, le support 14 comporte une vis sans fin 15 coopérant avec le bord de la platine 12. L'angle de rotation de la platine autour de l'axe qz ou N est désigné Φ.

En outre, la platine comporte une fenêtre 16 pour le passage du faisceau incident. La fenêtre 16 est destinée à être obturée par la face arrière de l'échantillon, de sorte que le faisceau incident tape directement sur l'échantillon et que les rayons X diffusent en rencontrant les nervures. L'énergie des photons est choisie de sorte qu'ils traversent le substrat sans être trop absorber. L'énergie des photons est par exemple comprise entre 15 keV et 25 keV.

Nous utiliserons désormais les directions qx, qy, qz.

Le fonctionnement du système de reconstruction va maintenant être décrit.

L'échantillon est placé sur la platine 14 du porte-échantillon de sorte que sa face arrière obture la fenêtre 16.

La platine 12 est inclinée autour de qy, la normale à l'échantillon formant un angle ψ avec la direction la direction du faisceau incidente. L'échantillon est mis en rotation autour de qz. Par exemple ψ peut être égal à 45°, de préférence ψ est inférieur ou égal à 60°. La valeur de ψ est choisie en fonction de plusieurs critères, en effet plus ψ est grand plus il y d'absorption, mais plus ψ est grand plus l'exploration selon qz est profonde. Il est alors possible d'analyser un échantillon mince.

Ensuite, la source de rayons X est activée et émet un faisceau incident FI qui traverse la fenêtre 16 et traverse l'échantillon. Les rayons X sont diffusés par les rainures 4 et les rayons diffusés sont captés par le détecteur 8. La platine 12 et donc l'échantillon sont mis en rotation autour de la direction qz (ou N) pendant toute l'acquisition de la figure de diffraction.

Lorsque l'échantillon a fait au moins un quart de tour, la source de rayons X est éteinte. L'acquisition est terminée. Comme nous le verrons par la suite, les informations fournies par un quart de tour sont suffisantes, les trois autres quarts fournissent les mêmes informations et sont avantageusement utilisées pour améliorer la statistique des mesures.

L'échantillon est mis en rotation autour de l'axe qz, car on souhaite obtenir la variation d'intensité le long de la direction qz, de manière similaire à la technique CD-SAXS. D'une part, en inclinant l'échantillon d'un angle $\psi$ autour de qy, le cliché de diffraction obtenu sera celui d'une coupe de l'échantillon (qxcos$\psi$, qy, qzsin$\psi$) du réseau réciproque. D'autre part, en faisant tourner l'échantillon autour de l'axe qz, on modifie la position de la coupe le long de qz. Sans l'inclinaison $\psi$, la position de la coupe le long de qz serait invariable avec la rotation autour de qz.

La figure 6 représente schématiquement une figure de diffraction obtenue sans rotation de l'échantillon autour de l'axe Z. La figure de diffraction comporte des points correspondant aux interférences constructives entre une famille de plans et les rayons du faisceau incident. Dans ce cas la famille de plans est fixe.

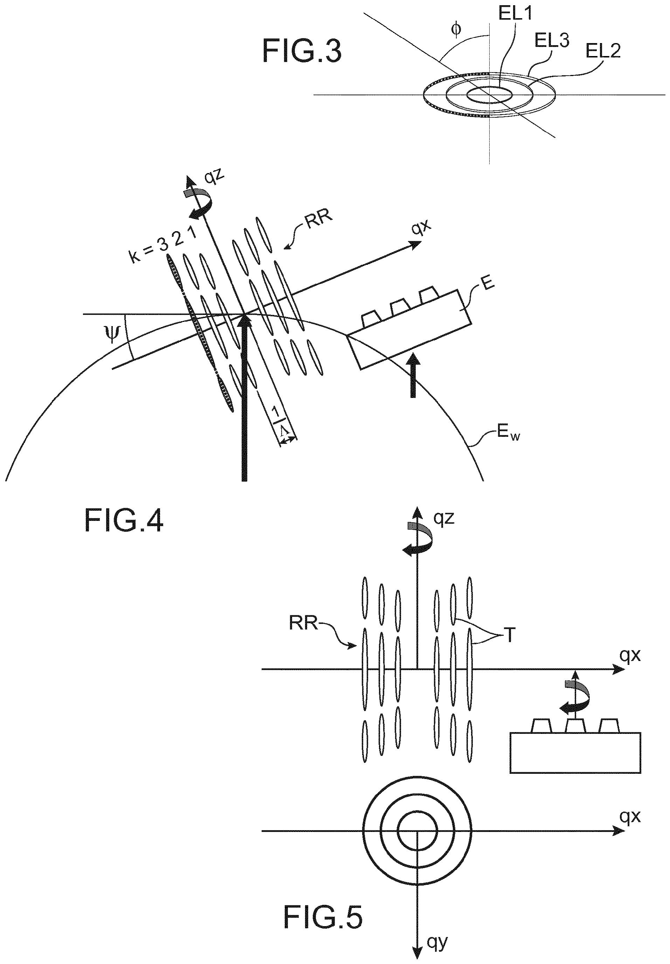

Sur la figure 4, on peut voir une représentation schématique d'une figure de diffraction obtenue grâce au système selon l'invention, elle comporte des ellipses concentriques EL1, EL2, EL3 centrées sur le point d'intersection du faisceau incident et le plan (qx, qy).

En effet, du fait de la rotation continue de l'échantillon, les plans qui sont en interférence constructive avec les rayons du faisceau incident sont mobiles de manière continue. Il en résulte une succession de points sur la figure de diffraction.

Par ailleurs, concernant la répartition sous forme d'ellipses, la disposition des points résulte de l'intersection de la sphère d'Ewald avec le réseau réciproque. Comme expliqué ci-dessus, au cours de l'acquisition continue de la figure de diffraction, on déplace la coupe de l'échantillon le long de la direction qz.

Sur la figure 5, on peut voir représentées schématiquement les tiges de diffraction désignées T dans le plan (qx, qz) qui correspondent à une coupe à une position qy donnée du réseau réciproque tridimensionnel. En faisant tourner l'échantillon autour de qz, les tiges de diffraction forment des cylindres concentriques. Sur la figure 5, on voit la vue en coupe de ces cylindres selon un plan orthogonal à qy.

En outre, est représenté schématiquement la sphère d'Ewald Ew. Celle-ci n'est pas représentée à l'échelle. Il faut en fait considérer que l'intersection entre le réseau réciproque RR et la sphère d'Ewald peut être approximée à un plan P.

Le réseau réciproque est incliné de l'angle $\psi$ par rapport à qz. Il en résulte que le plan P coupe les cylindres du réseau réciproque RR selon un angle non droit. Or l'intersection d'un cylindre et d'un plan selon un angle non droit est une ellipse.

Les différents cylindres correspondent aux différents ordres de diffraction, ils sont désignés 1, 2, 3.

Par conséquent, la figure de diffraction comporte des ellipses concentriques EL1, EL2, EL3.

Les ellipses sont donc une variation d'intensité en fonction de l'angle de rotation $\Phi$, on peut alors écrire I($\Phi$). Les ellipses comportent quatre portions identiques. On peut n'utiliser la variation d'intensité que le long d'1/4 de l'ellipse, ou de manière avantageuse on réalise une moyenne sur deux, trois ou de préférence les quatre quarts.

Comme indiqué ci-dessus et comme cela se comprend de la figure 5, en faisant tourner l'échantillon autour de qz, la position selon qz de l'intersection entre le plan et les cylindres varie. Par conséquent il s'agit également d'une variation de l'intensité en fonction de qz, on peut écrire que I(qz) = I($\Phi$).

Sachant que $qz = \dfrac{k}{\Lambda} tan\psi sin\Phi,$ il est aisé de convertir I($\psi$) en I(qz).

Avec k l'ordre de diffraction et 1/$\Lambda$ la distance entre les tiges dans le réseau réciproque. La première tige apparait donc à 1/$\Lambda$, la deuxième à 2/$\Lambda$ et la k$^{ième}$ à k/$\Lambda$.

On obtient alors directement la variation de l'intensité en fonction de qz. Chaque ellipse correspond à une position le long de la direction qx. On peut alors représenter graphiquement I(qz) et obtenir les courbes de la figure 7, identiques à celles obtenues par CD-SAXS.

A partir de I(qz) à différentes positions le long de qx, avec les mêmes traitements que ceux appliqués à la variation d'intensité en fonction de qz obtenues par CD-SAW et bien connus de l'homme du métier, on peut déterminer, comme avec le technique CD- la morphologie des nervures. Comme indiqué ci-dessus, de tels traitements sont par exemple décrit dans le document Tengjiao Hu, Ronald L. Jones, Wen-li Wu, Eric K. Lin, Qinghuang Lin, Denis Keane, Steve Weigand and John Quintana Small angle x-ray scattering metrology for sidewall angle and cross section of nanometer scale line gratings Journal of Applied Physics 2004, 96, 1983 doi: 10.1063/1.1773376.

On peut déterminer les caractéristiques d'une coupe transversale du réseau, par exemple la période du réseau organisé, dans le cas de nervures ou de plots les dimensions de ceux-ci, la pente des flancs des plots ou nervures.

En outre, la méthode permet de détecter une gravure partielle de cavités, i.e. la présence de matériau résiduel non gravé au fond des cavités. En effet, le traitement de I(qz) permet de mesurer la différence de densités électroniques entre plusieurs matériaux, et donc de détecter la présence de ce matériau.

L'invention permet donc de ne pas avoir à acquérir un grand nombre des figures de diffraction, ce qui réduit sensiblement la durée de la reconstruction.

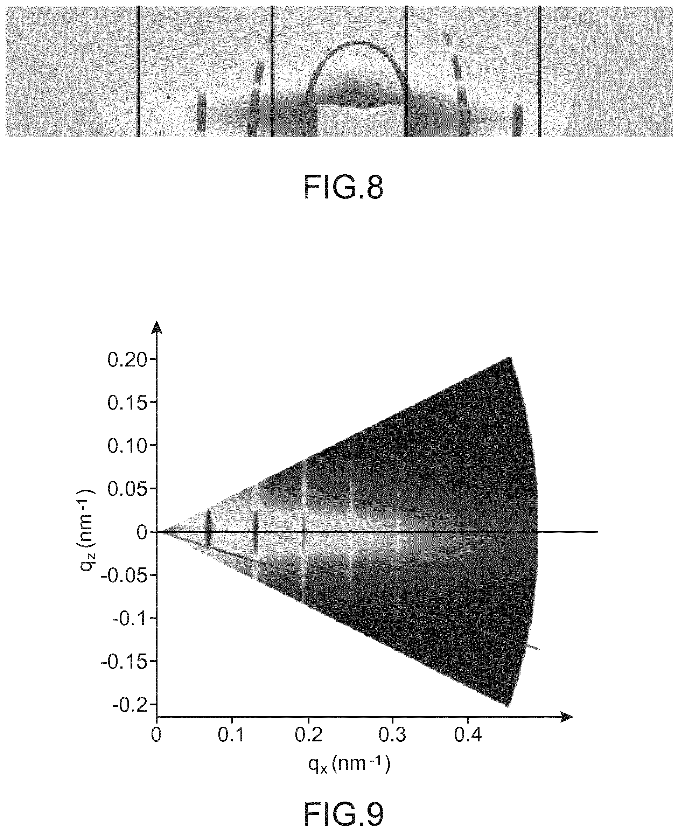

Sur la figure 8, on peut voir une image obtenue grâce au procédé selon l'invention sur laquelle on peut voir les ellipses. Il est à noter que le détecteur utilisé présentait une taille insuffisante pour obtenir les ellipses entières.

A titre de comparaison, la figure 9 représente la cartographie selon qx et qz réalisée sur le même échantillon obtenue par la méthode de l'état de la technique.

## Revendications

1. Méthode de détermination, par diffraction en transmission d'un faisceau incident, de la variation d'intensité diffractée par un réseau bidimensionnel organisé dans une direction donnée (qz) orthogonale au plan du réseau bidimensionnel, comportant :

   - mise en place du réseau bidimensionnel organisé de sorte que la direction donnée (qz) forme un angle ($\psi$) avec la direction du faisceau incident,
   - mise en rotation du réseau bidimensionnel organisé autour de la direction donnée (qz),
   - acquisition d'un cliché de diffraction pendant au moins un quart de révolution du réseau bidimensionnel organisé autour de la direction donnée (qz),
   - arrêt de la rotation,
   - extraction de la variation d'intensité diffractée dans la direction donnée (qz).

2. Méthode de détermination selon la revendication 1, dans laquelle le cliché de diffraction comporte plusieurs quarts d'ellipses concentriques (EL1, EL2, EL3), chaque ellipse correspondant chacune à un ordre de diffraction.

3. Méthode de détermination selon la revendication 2, dans laquelle l'acquisition se fait pendant au moins une révolution complète, dans laquelle le cliché de diffraction comporte des ellipses concentriques et dans laquelle une moyenne sur les quatre quarts de chaque ellipse est effectuée.

4. Méthode de détermination selon la revendication 1, 2 ou 3, dans laquelle la diffraction est une diffraction de rayons X.

5. Méthode de détermination selon l'une des revendications 1 à 4, dans laquelle l'angle d'inclinaison ($\psi$) est compris entre 45° et 60°.

6. Méthode de reconstruction tridimensionnelle d'une morphologie d'au moins un objet comportant un réseau bidimensionnel organisé comportant :

   - la détermination de la variation d'intensité diffractée en transmission par un réseau bidimensionnel organisé, dans une direction donnée (qz), en appliquant la méthode de détermination selon l'une des revendications 1 à 5,
   - le traitement de la variation d'intensité diffractée dans la direction donnée de sorte à obtenir des caractéristiques d'une section transversale du réseau bidimensionnel organisé.

7. Méthode de reconstruction selon la revendication 6, mise en œuvre pendant la fabrication de composants par des procédés microélectroniques.

8. Système de reconstruction tridimensionnelle de la morphologie d'objets présentant un réseau bidimensionnel organisé par diffraction en transmission, comportant-

   - un dispositif d'acquisition (MA) d'au moins un cliché de diffraction, comprenant un source d'un faisceau incident (6), un détecteur (8), un porte-échantillon (10) disposé entre la source de faisceau incident (6)et le détecteur (8), le porte-échantillon (10) comportant une platine (12) et un support (14) et de moyens de mise en rotation continue de la platine (12) autour d'une direction donnée normale à l'objet, le dispositif d'acquisition étant configuré pour commander les moyens de mise en rotation de la platine de sorte qu'elle tourne en continu lors de l'acquisition d'au moins un cliché de diffraction, la platine (12) et le support (14) étant configurés pour orienter le réseau bidimensionnel organisé de sorte que la direction orthogonale au plan du réseau forme un angle ($\psi$) avec la direction du faisceau incident,
   - des moyens de traitement (MT) du au moins un cliché de diffraction configurés pour extraire la variation d'intensité diffracté dans la direction donnée.

9. Système de reconstruction selon la revendication précédente, dans lequel la platine (12) comporte une fenêtre (16) alignée avec la direction donnée.

10. Système de reconstruction selon la revendication 8 ou 9, dans lequel les moyens de mise en rotation continue comportent une vis sans fin (15) coopérant avec un bord de la platine (12) et un moteur électrique entrainant la vis sans fin.

**Patentansprüche**

1. Verfahren zur Bestimmung, mittels Transmissionsbeugung eines einfallenden Strahls, der Variation der Intensität, die durch ein organisiertes zweidimensionales Gitter in einer gegebenen Richtung (qz) orthogonal zur Ebene des zweidimensionalen Gitters gebeugt wird, umfassend:

   - Platzieren des organisierten zweidimensionalen Gitters derart, dass die gegebene Richtung (qz) einen Winkel ($\psi$) mit der Richtung des einfallenden Strahls bildet,
   - Versetzen des organisierten zweidimensionalen Gitters in Drehung um die gegebene Richtung (qz) herum,
   - Erfassen einer Beugungsaufnahme während wenigstens einer Vierteldrehung des organisierten zweidimensionalen Gitters um die gegebene Richtung (qz) herum,
   - Anhalten der Drehung,
   - Extrahieren der Variation der gebeugten Intensität in der gegebenen Richtung (qz).

2. Verfahren zur Bestimmung nach Anspruch 1, bei dem die Beugungsaufnahme mehrere Viertel von konzentrischen Ellipsen (EL1, EL2, EL3) umfasst, wobei jede Ellipse jeweils einer Beugungsordnung entspricht.

3. Verfahren zur Bestimmung nach Anspruch 2, bei dem die Erfassung während wenigstens einer vollständigen Umdrehung erfolgt, bei dem die Beugungsaufnahme konzentrische Ellipsen umfasst, und bei dem eine Mittelung über die vier Viertel jeder Ellipse durchgeführt wird.

4. Verfahren zur Bestimmung nach Anspruch 1, 2 oder 3, bei dem die Beugung eine Beugung von Röntgenstrahlen ist.

5. Verfahren zur Bestimmung nach einem der Ansprüche 1 bis 4, bei dem der Neigungswinkel ($\psi$) zwischen 45° und 60° enthalten ist.

6. Verfahren zur dreidimensionalen Rekonstruktion einer Morphologie wenigstens eines Objekts, das ein organisiertes zweidimensionales Gitter umfasst, umfassend:

   - die Bestimmung der Variation der Intensität, die in Transmission durch ein organisiertes zweidimensionales Gitter in einer gegebenen Richtung (qz) gebeugt wird, durch Anwenden des Verfahrens zur Bestimmung nach einem der Ansprüche 1 bis 5,
   - die Verarbeitung der Variation der gebeugten Intensität in der gegebenen Richtung derart, dass Eigenschaften eines Querschnitts des organisierten zweidimensionalen Gitters erhalten werden.

7. Verfahren zur Rekonstruktion nach Anspruch 6, das während der Herstellung von Komponenten mittels mikroelektronischer Verfahren durchgeführt wird.

8. System zur dreidimensionalen Rekonstruktion der Morphologie von Objekten, die ein organisiertes zweidimensionales Gitter aufweisen, mittels Beugung in Transmission, umfassend:

   - eine Vorrichtung zur Erfassung (MA) wenigstens einer Beugungsaufnahme, umfassend eine Quelle für einen einfallenden Strahl (6), einen Detektor (8), einen Probenträger (10), der zwischen der Quelle für den einfallenden Strahl (6) und dem Detektor (8) angeordnet ist, wobei der Probenträger (10) eine Platine (12) und einen Träger (14) umfasst, sowie Mittel zum Versetzen der Platine (12) in kontinuierliche Drehung um eine gegebene Richtung senkrecht zum Objekt herum, wobei die Erfassungsvorrichtung dazu konfiguriert ist, die Mittel zum Indrehungversetzen der Platine derart zu steuern, dass sie sich kontinuierlich während der Erfassung wenigstens einer Beugungsaufnahme dreht, wobei die Platine (12) und der Träger (14) dazu konfiguriert sind, das organisierte zweidimensionale Gitter derart zu orientieren, dass die Richtung orthogonal zur Ebene des Gitters einen Winkel ($\psi$) mit der Richtung des einfallenden Strahls bildet,
   - Mittel zur Verarbeitung (MT) der wenigstens einen Beugungsaufnahme, die dazu konfiguriert sind, die Variation der gebeugten Intensität in der gegebenen Richtung zu extrahieren.

9. System zur Rekonstruktion nach dem vorhergehenden Anspruch, bei dem die Platine (12) ein Fenster (16) umfasst, das mit der gegebenen Richtung ausgerichtet ist.

10. System zur Rekonstruktion nach Anspruch 8 oder 9, bei dem die Mittel zum Versetzen in kontinuierliche Drehung eine Endlosschraube (15) umfassen, die mit einem Rand der Platine (12) zusammen wirkt, sowie einen Elektromotor, der die Endlosschraube antreibt.

**Claims**

1. A method for determining, by transmission diffraction of an incident beam, diffracted intensity variation by an organised two-dimensional grating in a given direction (qz) orthogonal to the plane of the two-dimensional grating, including:

- placing the organised two-dimensional grating so that the given direction (qz) is at an angle ($\psi$) with the direction of the incident beam,
- rotating the organised two-dimensional grating about the given direction (qz),
- acquiring a diffraction pattern during at least one quarter of revolution of the organised two-dimensional grating about the given direction (qz),
- stopping rotating,
- extracting the diffracted intensity variation in the given direction (qz).

2. The determining method according to claim 1, wherein the diffraction pattern includes several quarters of concentric ellipses (EL1, EL2, EL3), each ellipse corresponding to a diffraction order.

3. The determining method according to claim 2, wherein acquiring is performed during at least one complete revolution, in which the diffraction pattern includes concentric ellipses and in which averaging the four quarters of each ellipse is carried out.

4. The determining method according to claim 1, 2 or 3, wherein the diffraction is an X-ray diffraction.

5. The determining method according to one of claims 1 to 4, wherein the tilt angle ($\psi$) is between 45° and 60°.

6. A method for three-dimensionally reconstructing morphology of at least one object including an organised two-dimensional grating including:

- determining transmission diffracted intensity variation by an organised two-dimensional grating, in a given direction (qz), by applying the determining method according to any of claims 1 to 5,
- processing the diffracted intensity variation in the given direction so as to obtain characteristics of a cross-section of the organised two-dimensional grating.

7. The reconstructing method according to claim 6, implemented upon manufacturing components by microelectronic processes.

8. A system for three-dimensionally reconstructing the morphology of objects having an organised two-dimensional grating by transmission diffraction, including

- a device (MA) for acquiring at least one diffraction pattern, comprising a source of an incident beam (6), a detector (8), a sample-holder (10) disposed between the source of incident beam (6) and the detector (8), the sample-holder (10) including a plate (12) and a support (14) and means for continuously rotating the plate (12) about a given direction normal to the object, the acquiring device being configured to control the means for rotating the plate so that the latter continuously rotates upon acquiring at least one diffraction pattern, the plate (12) and the support (14) being configured to orient the organised two-dimensional grating so that the direction orthogonal to the plane of the grating is at an angle ($\psi$) with the direction of the incident beam,
- means (MT) for processing the at least one diffraction pattern configured to extract the diffracted intensity variation in the given direction.

9. The reconstructing system according to the previous claim, wherein the plate (12) includes a window (16) aligned with the given direction.

10. The reconstructing system according to claim 8 or 9, wherein the continuous rotating means include a worm screw (15) cooperating with an edge of the plate (12) and an electric motor driving the worm screw.

FIG.1

FIG.2

FIG.3

FIG.4

FIG.5

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **TENGJIAO HU ; RONALD L. JONES ; WEN-LI WU ; ERIC K. LIN ; QINGHUANG LIN ; DENIS KEANE ; STEVE WEIGAND ; JOHN QUINTANA SMALL.** angle x-ray scattering metrology for sidewall angle and cross section of nanometer scale line gratings. *Journal of Applied Physics,* 2004, vol. 96, 1983